# EUROPEAN PATENT SPECIFICATION

(11) **EP 2 216 962 B1**
(45) Date of publication and mention of the grant of the patent: **23.10.2013**
(21) Application number: 08861489.6
(22) Date of filing: 09.12.2008
(51) Int. Cl.: H04L 29/06, H04L 12/28, H04L 29/08

(54) **A METHOD FOR DEPLOYING AND MANAGING THE SIP SERVLET APPLICATION AND THE OSGI SERVICE PLATFORM THEREOF**
VERFAHREN FÜR DEN EINSATZ UND DIE VERWALTUNG EINER SIP-SERVLET-ANWENDUNG UND OSGI-DIENSTPLATTFORM DAFÜR
PROCÉDÉ POUR DÉPLOYER ET GÉRER UNE APPLICATION SIP SERVLET ET LA PLATE-FORME DE SERVICES OSGI DE CELLE-CI

(30) Priority: 14.12.2007 CN 200710199571
(43) Date of publication of application: 11.08.2010
(73) Proprietor: Huawei Technologies Co., Ltd., Longgang District, Shenzhen Guangdong 518129 (CN)
(72) Inventor: DENG, Haijun, Shenzhen (CN); NANDA, Kishore E., Shenzhen (CN)
(74) Representative: Körber, Martin Hans
(86) International application number: PCT/CN2008/073386
(87) International publication number: WO 2009/076877

(56) References cited:
- WO-A1-2005/055549
- CN-A- 1 662 004
- CN-A- 101 051 943
- JP-A- 2007 279 959
- US-A1- 2005 232 283
- US-A1- 2007 280 226
- US-A1- 2007 280 226
- BUSHMITCH D ET AL: "A SIP-based device communication service for OSGI framework", CONSUMER COMMUNICATIONS AND NETWORKING CONFERENCE, 2004. CCNC 2004. FI RST IEEE LAS VEGAS, NV, USA 5-8 JAN. 2004, PISCATAWAY, NJ, USA,IEEE, 5 January 2004 (2004-01-05), pages 453-458, XP010696870, ISBN: 978-0-7803-8145-2

## Description

### FIELD OF THE TECHNOLOGY

The present invention relates to an SIP container and SIP Servlet application technology, and more particularly to a technology of integrating an SIP container and an OSGI service platform to jointly manage an SIP Servlet application.

### BACKGROUND OF THE INVENTION

The Open Services Gateway Initiative (OSGI) service platform is an open plug-in system framework which provides a uniform interface standard. Based on the system framework, service providers, program developers, software providers, service network operators, and equipment providers can cooperate to jointly develop, deploy, and manage services provided to users. The OSGI service platform is a Java-based platform. The OSGI was originally proposed and developed for flexible, convenient, and remote management of interconnected network embedded devices.

Most routers support the hot swap of modules, that is, functional modules having certain functions can be dynamically added or unloaded when a router operates. The hot swap technology in the hardware industry is also desired by the software industry, while the OSGI realizes the hot swap technology in the software industry.

The OSGI supports dynamic expansion and modification of system functions and change of system. Many OSGI components, that is, OSGI Bundles, can be deployed on the OSGI service platform. The OSGI has a complete mechanism for dynamically changing the system behaviors. When an OSGI-based system operates, a new Bundle can be installed, or an existing Bundle can be updated or stopped, so as to implement the swap of system functions. As the system functions are swappable, and the system can be changed dynamically, it is ensured that the system is flexible and expandable enough in operation.

All modules in the OSGI service platform framework must operate within a container, and must be deployed as a Bundle. The Bundle is a jar file, which is different from a normal jar file in terms of the content in the MANIFEST.MF file under the Meta-inf directory. All information about the Bundle is described in MANIFEST.MF, so the MANIFEST.MF file can be referred to as metadata of the Bundle. For example, the information includes the name of the Bundle, description of the Bundle, developer of the Bundle, classpath of the Bundle, packages to be imported, and packages to be exported.

The OSGI service platform invokes a Bundle activator of each Bundle to control a life cycle of the Bundle. Generally, the Bundle activator is a program named BundleActivator. The work content to be performed when the Bundle is started or stopped is specified in the BundleActivator, and event status information of the framework is also published or monitored in the BundleActivator, so that the BundleActivator determines the operation status of the framework according to the event status information and make corresponding adjustment.

In the OSGI framework, each of Bundles can register BundleContext on the OSGI service platform, so as to register services available to the outside, and obtain services to be referred to through the BundleContext.

The basic structure of the OSGI service platform is described above. The OSGI service platform grants a system based on the platform with the capability of dynamically changing the system. A user can deploy a plurality of hot swappable OSGI Bundles on the OSGI service platform, and may install, update, or stop the OSGI Bundles when the system is in operation.

The Session Initiation Protocol (SIP) is an Internet Protocol (IP)-based application layer control protocol defined by the Internet Engineering Task Force. As a signaling protocol based on plain text, the SIP manages sessions on different access networks. The sessions may be any type of communication between terminals, for example, video sessions, instant messaging sessions, or collaboration sessions. This protocol does not define or limit usable services, and the problems such as transmission, quality of service (QoS), charging, and security are all processed by the basic core network and other protocols.

An SIP Servlet application is a servlet based on the SIP. Theoretically, the SIP Servlet application can realize all functions that can be realized through the Java language. In practice, the SIP Servlet applications are used to implement the background logic operations of web applications.

The SIP Servlets specifications provide a series of Java Application Programming Interfaces (APIs) and a development model based on the SIP container or application server, so as to improve the development efficiency of the server applications. The SIP Servlets are also based on the Java Servlet architecture.

By using the SIP container provided in the SIP Servlets specifications, developers can easily develop complex SIP Servlet applications. A plurality of SIP Servlet applications forms a group of SIP Servlets. After the group of SIP Servlets is packaged with resources and deployment description files, the package is deployed and run in an SIP container.

The SIP container provides services such as session state management, transaction management, retransmission, network connection, message scheduling, thread management, resource management, and application management. The application only needs to contain advanced message handling and service logic. Thus, the developers no longer need to make too much effort on the protocols, so the development of SIP services becomes easier.

Each SIP Servlet application is a component of the SIP container, and is managed and scheduled by the SIP container. For example, when the SIP container receives an SIP request, the SIP container makes a series of judgments to determine the SIP Servlet application to be invoked to process the request.

In the prior art, when the SIP Servlet application is developed in the SIP container, various management and resources provided by the SIP container can be used, which brings great convenience to the developers. However, since the SIP container based on the SIP Servlets specification does not support dynamic expansion of the system, that is, does not support the hot swap of SIP Servlet applications, the flexibility of the system is greatly limited.

Apparently, in the prior art, the SIP Servlet application developed and applied in the SIP container is not hot swappable and cannot dynamically change the system. In addition, since the SIP Servlet application is not an OSGI Bundle on the OSGI service platform, the SIP Servlet application cannot communicate with the OSGI Bundles in a standard manner.

A network of devices having a plurality of local domains is provided in prior art. In the network, each local domain is likely to comprise a plurality of communities of devices that communicate using a shared native protocol. The Open Services Gateway initiative (OSGi) creates a platform and method for various networks to communicate with one another in a local domain. An instant messaging protocol such as Session Initiation Protocol (SIP) and a remote services register are used to provide a means for communication between local devices in a plurality of local OSGi domains using native communications protocols.

A system for deploying at least one service in response to a communications session message is provided in prior art. The system comprises a session initiation protocol (SIP) server responsive to the session message to identify one of a plurality of servlets, each of the servlets providing a predefined service to a user and a servlet container. The servlet container is operable to host and to invoke the plurality of servlets. The SIP server is operable to respond to the SIP message to modify the session message to provide a route address for routing the session message to the servlet container, the address being a universal resource identifier.

A SIP based device communication service for OSGI frame work is provided in prior art. The SIP and OSGI can be combined to support interoperation between mobile device and home network device.

A media rich servlet for enabling media rich SIP-based applications is provided by prior art. The media rich SIP servlet is enabled by using a media control layer and a conventional SIP Servlet container.

### SUMMARY OF THE INVENTION

The present invention is directed to a method for deploying an SIP Servlet application, a method and an OSGI service platform for managing an SIP Servlet application, so as to enable the SIP Servlet application to be managed and scheduled by an SIP container, and to have the hot swap performance of an OSGI Bundle.

According to a first aspect of the invention a method for deploying an SIP Servlet application is provided, which includes: deploying an SIP Servlet application on an OSGI service platform as an OSGI Bundle, and deploying the SIP Servlet application in an SIP container. When the SIP Servlet application Bundle is deployed on the OSGI service platform, a BundleActivator of the SIP Servlet application is invoked automatically, and when the BundleActivator is invoked, a deployApplication method of the SIP container is invoked through a singleton pattern or a naming service.

According to a second aspect of the invention an OSGI service platform for managing an SIP Servlet application is provided, which includes an SIP container and an SIP Servlet application.

The SIP Servlet application is deployed on the OSGI service platform as an OSGI Bundle, and is deployed in the SIP container. The SIP Servlet application communicates with other OSGI Bundles on the OSGI service platform through a mechanism of the OSGI service platform. When the SIP Servlet application Bundle is deployed on the OSGI service platform, a BundleActivator of the SIP Servlet application is invoked automatically, and when the BundleActivator is invoked, a deployApplication method of the SIP container is invoked through a singleton pattern or a naming service.

In embodiments of the present invention, the SIP Servlet application is deployed onto the OSGI service platform as an OSGI Bundle, such that the SIP Servlet application has better dynamic performance, is hot swappable, and can communicate with other OSGI Bundles through a Bundle communication mode defined in OSGI specifications.

In embodiments of the present invention, after the SIP Servlet application is deployed to the OSGI service platform as an OSGI Bundle, the SIP Servlet application is further registered to the SIP container, and a method of a class, which is used for the SIP container to load the SIP Servlet application, is invoked. Thus, the SIP container can manage and schedule the SIP Servlet application, and the OSGI service platform is integrated with the SIP container to jointly manage the SIP Servlet application, such that the SIP Servlet application is managed and scheduled by the SIP container, and has the hot swap performance of the OSGI Bundle.

### BRIEF DESCRIPTION OF THE DRAWINGS

FIG. 1 is a flowchart of a method for integrating an OSGI service platform and an SIP container to jointly manage an SIP Servlet application according to a first embodiment of the present invention;
FIG. 2 is a flowchart of a process of deploying the SIP Servlet application on the OSGI service platform as an OSGI Bundle according to the first embodiment of the present invention;
FIG. 3 is a schematic diagram of a directory structure of the SIP Servlet application which is organized based on the SIP Servlet specification and the adding of an SIP file according to the first embodiment of the present invention;
FIG. 4 is a schematic diagram of a directory structure which is organized based on the requirements of the OSGI service platform and the adding of a Bundle configuration file according to the first embodiment of the present invention;
FIG. 5a is a flowchart of an implementing process of a start method in BundleActivator of the SIP Servlet application according to the first embodiment of the present invention;
FIG. 5b is a schematic diagram of a process of deploying the SIP Servlet application and the SIP container on the OSGI service platform according to the first embodiment of the present invention;
FIG. 5c is a schematic diagram of a process of deploying the SIP Servlet application on the OSGI service platform according to the first embodiment of the present invention;
FIG. 5d is a flowchart of a process for initializing an OSGISipApplication object according to the first embodiment of the present invention;
FIG. 6a is a flowchart of a process for registering SIP Servlet application to the SIP container according to the first embodiment of the present invention;
FIG. 6b is a flowchart of a method for the SIP container to load a Bundle instance of the SIP Servlet application according to the first embodiment of the present invention;
FIG. 7a is a schematic diagram of the OSGI service platform, which is integrated with the SIP container for jointly managing the SIP Servlet application according to the first embodiment of the present invention;
FIG. 7b is a schematic diagram of the OSGI service platform, which is integrated with the SIP container for jointly managing the SIP Servlet application according to the first embodiment of the present invention; and
FIG. 8 is a flowchart of an implementing process of a start method in BundleActivator of the SIP Servlet application according to a second embodiment of the present invention.

### DETAILED DESCRIPTION OF THE EMBODIMENTS

In embodiments of the present invention, an SIP container and an SIP Servlet application are deployed on an OSGI service platform as OSGI Bundles. At this time, the SIP container and the SIP Servlet application have characteristics of the OSGI Bundle, and the OSGI service platform can manage their life cycles, for example, by activation, registration, and deactivation. By registering an SIP Servlet application to the SIP container, the SIP container can manage and schedule the SIP Servlet application. Thus, the OSGI service platform and the SIP container are integrated to jointly manage the SIP Servlet application.

Here, the meaning of integrating the OSGI service platform and the SIP container to jointly manage the SIP Servlet application is explained as follows. For an SIP Servlet application deployed on the OSGI service platform as the OSGI Bundle, the OSGI mainly manages the life cycle of the Bundle, and manages the communication between the Bundle and other Bundles. At this time, the SIP Servlet application becomes hot swappable and the OSGI service platform controls the life cycle of the Bundle (i.e. the SIP Servlet application) by invoking a BundleActivator of the Bundle, i.e. the interface of the Bundle. The OSGI service platform does not care the functions of the Bundle, i.e. the SIP Servlet application. After the SIP Servlet application is activated, the OSGI service platform does not manage the operations for scheduling and invoking the SIP Servlet application.

For an SIP Servlet application registered to the SIP container, the scheduling and invocation operations are managed by the SIP container. After receiving an SIP request from an external source, the SIP container determines whether to invoke the SIP Servlet application to process the task corresponding to the SIP request according to the registration information of SIP Servlet application(s).

The technical solution of the present invention is described below in detail through specific embodiments. In a first embodiment, deploying the SIP container and the SIP Servlet application on the OSGI service platform as OSGI Bundles and registering the SIP Servlet application to the SIP container are described. In a second embodiment, deploying the SIP container and the SIP Servlet application on the OSGI service platform as OSGI Bundles and registering the SIP Servlet application to the SIP container by referring to a Bundle of a deployment service are described.

### First Embodiment

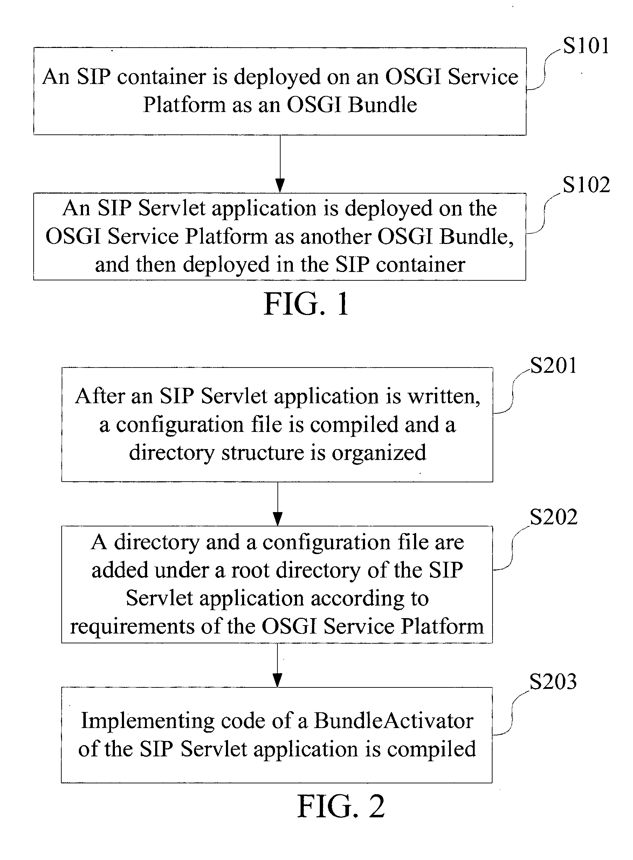

As shown in FIG. 1, the method for deploying the SIP container and SIP Servlet application on the OSGI service platform as OSGI Bundles according to this embodiment of the present invention includes the following steps.

In Step S101, the SIP container is deployed on the OSGI service platform as an OSGI Bundle.

A BundleActivator of the SIP container serving as a Bundle on the OSGI service platform is complied, and a MANIFEST.MF configuration file of the SIP container is added. Here, the configuration file is a Bundle configuration file of the SIP container. Bytecode of the SIP container is packaged into a Jar file. After all OSGI Bundles are activated, the OSGI service platform starts the SIP container through the BundleActivator of the SIP container. The BundleActivator of the SIP container contains operations of starting, updating, and stopping the SIP container. The Bundle configuration file of the SIP container contains the Bundle name, description, developer, and classpath of the SIP container.

Apparently, in specific implementations, persons skilled in the art may also enable the OSGI service platform and the SIP container to jointly manage the SIP Servlet application, without deploying the SIP container on the OSGI service platform as an OSGI Bundle. The detailed method will be described later.

In Step S102, the SIP Servlet application is deployed on the OSGI service platform as an OSGI Bundle, and then deployed in the SIP container.

The detail steps of Step S102 are as shown in FIG. 2.

In Step S201, after an SIP Servlet application is written, an SIP configuration file is compiled according to the SIP Servlet specification, and a directory structure is organized according to the specification of the OSGI service platform.

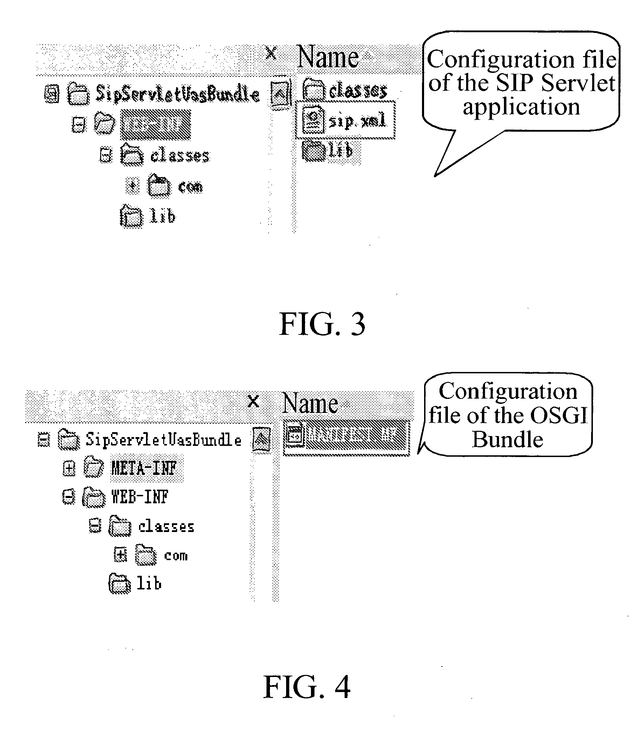

After the SIP Servlet application is written, the directory structure must be organized and the configuration file must be compiled according to the SIP Servlet specification, so as to facilitate the management of the SIP container. The organized directory structure is as shown in FIG. 3. A WEB-INF directory is set under the root directory of the SIP Servlet application, and classes and lib directories are arranged under the WEB-INF directory. A file with an extension of xml, that is, sip.xml, is the configuration file of the SIP Servlet application.

The configuration file describes the functions that the SIP Servlet application can realize, and the SIP configuration file is used by the SIP container to recognize the functions that can be realized by the SIP Servlet application.

In Step S202, according to requirements of the OSGI service platform, a META-INF directory and a MANIFEST.MF configuration file are added under the root directory of the SIP Servlet application.

A Bundle of the OSGI service platform must have a directory structure and a Bundle configuration file satisfying the requirements of the OSGI service platform, such that the OSGI service platform can manage the Bundle.

As shown in FIG. 4, in this embodiment of the present invention, a META-INF directory is added under the root directory of the SIP Servlet application, and a MANIFEST.MF file is added into the META-INF directory. The MANIFEST.MF file is a configuration file of the SIP Servlet application serving as a Bundle on the OSGI service platform. The information in the configuration file contains the name, description, developer, classpath, packages to be imported, and packages to be exported of the Bundle, i.e. the SIP Servlet application.

In Step S203, implementing code of a BundleActivator of the SIP Servlet application is compiled, such that the SIP Servlet application can be deployed on the OSGI service platform as an OSGI Bundle.

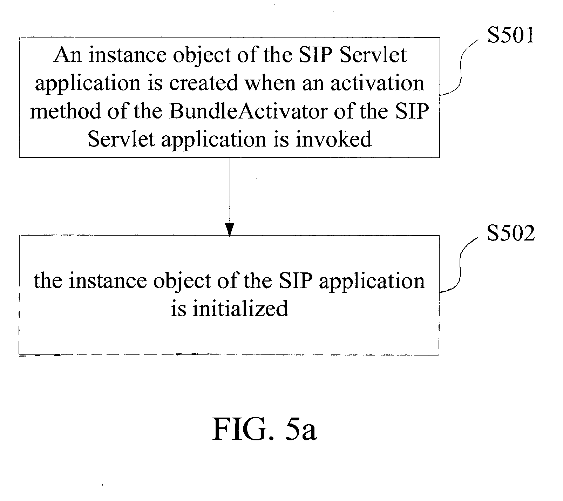

A BundleActivator of the SIP Servlet application is compiled. The BundleActivator is invoked to implement the activation, registration, and deactivation of the SIP Servlet application. When the SIP Servlet application is activated, the SIP Servlet application needs to be register to the SIP container, and a class, which is used for the SIP container to load the SIP Servlet application, needs to be invoked at the same time, as shown in FIG. 5a. To persons skilled in the art, compiling directly the implementing code in the BundleActivator.

After the above steps, the SIP Servlet application is successfully deployed on the OSGI service platform as an OSGI Bundle. However, in order to enable the SIP Servlet application to be managed by the SIP container, the SIP Servlet application need be registered to the SIP container, and a method of a class, which is used for the SIP container to load the SIP Servlet application, need be invoked. As shown in FIG. 5a, Step S203 further includes the following steps.

In Step S501, an instance object of the SIP Servlet application is created when an activation method of the BundleActivator of the SIP Servlet application is invoked.

Normally, the activation method of the BundleActivator of the SIP Servlet application is a start method, an instance object of SIP Servlet application, namely OSGISipApplication, is created when the start method is invoked, and the OSGISipApplication object is used to indicate an instance object of the SIP Servlet in the SIP container.

In Step S502, the instance object of the SIP application is initialized.

The SIP container cannot invoke the SIP Servlet application through the OSGISipApplication object unless the OSGISipApplication object is initialized. The OSGISipApplication object is used to describe an SIP Servlet application. When an SIP Servlet application is to be deployed in the SIP container, an object must be created to represent the SIP Servlet application.

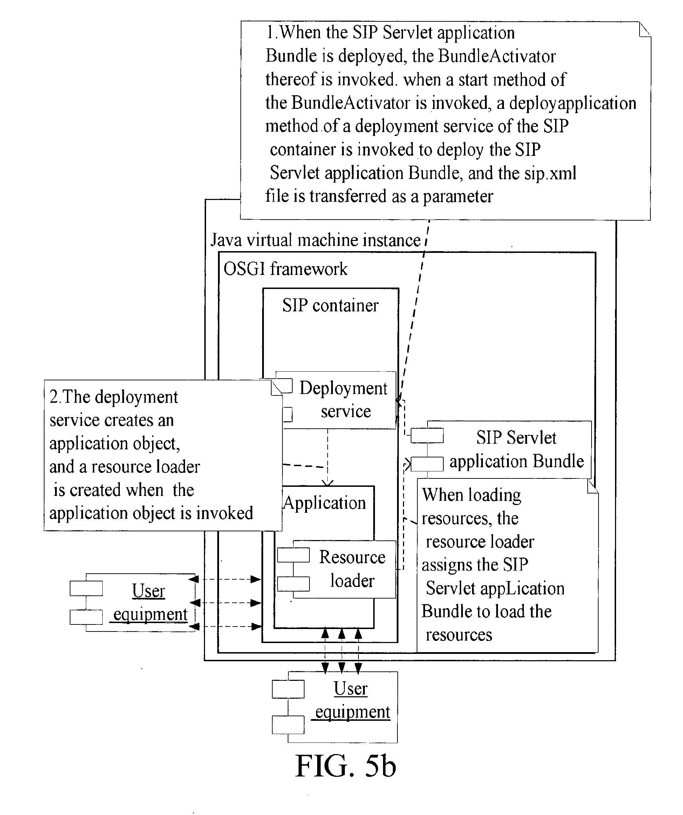

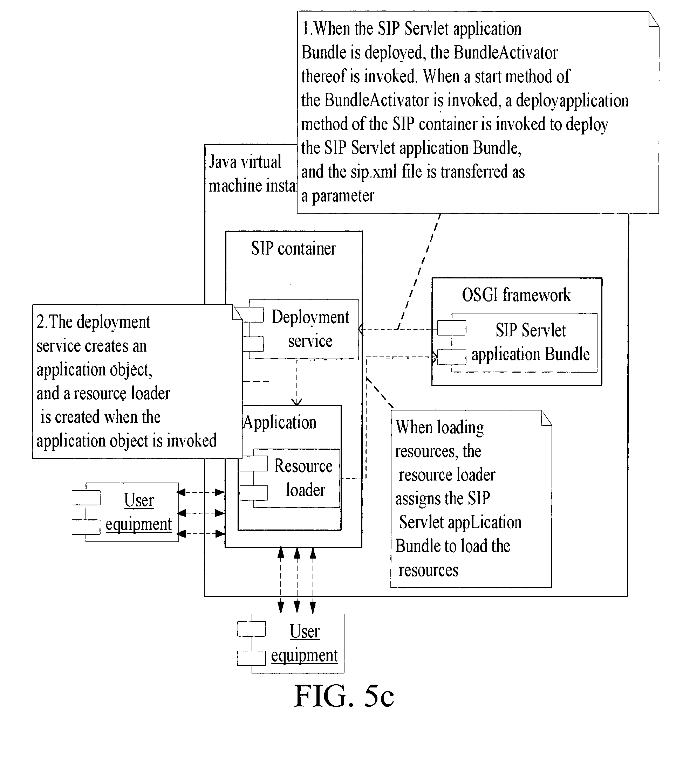

When the OSGISipApplication object is initialized, the SIP Servlet application needs to be deployed in the SIP container, and a method of a class, which is used for the SIP container to load the SIP Servlet application, needs to be invoked. Specifically, when the OSGISipApplication object is initialized, a deployApplication method of the SIP container is invoked to deploy the SIP Servlet application in the SIP container. To persons skilled in the art, many technical measures may be used to invoke the deployApplication method of the SIP container. If the SIP container has been deployed on the OSGI service platform as an OSGI Bundle, the deployApplication method of the SIP container may be invoked by obtaining an instance of the deployment service of the SIP container based on the BundleContext of the OSGI service platform, as shown in FIG. 5b. If the SIP container is not deployed on the OSGI service platform as an OSGI Bundle, the deployApplication method, which is used for deploying service, may be invoked by directly obtaining a class of the deployment service of the SIP container through a singleton pattern or a naming service, as shown in FIG. 5c.

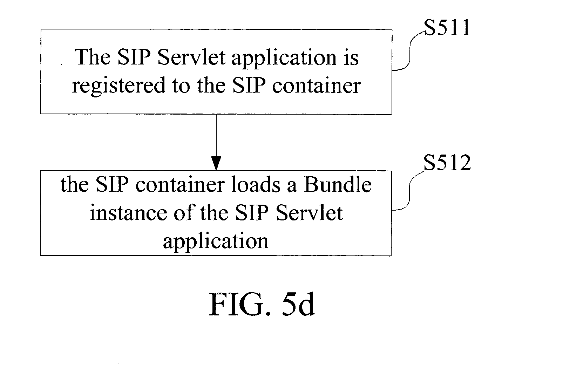

When the deployApplication method of the SIP container is invoked, the SIP Servlet application is deployed in the SIP container, as shown in FIG. 5d, which further includes the following steps:

In Step S511, the SIP Servlet application is registered to the SIP container.

The content in the SIP configuration file of the SIP Servlet application is registered to the SIP container, and the SIP container determines whether to invoke the SIP Servlet application according to the registered content.

In Step S512, the SIP container loads a Bundle instance of the SIP Servlet application.

The SIP container cannot manage the classes and resources of the SIP Servlet application unless the SIP container loads the Bundle instance of the SIP Servlet application.

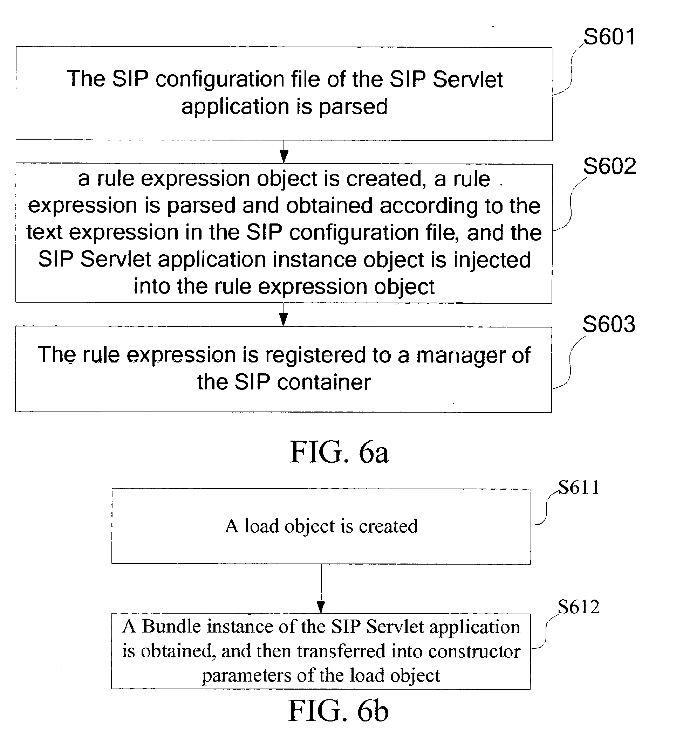

The process of registering the SIP Servlet application to the SIP container in Step S511 further includes the following steps, as shown in FIG. 6a.

In Step S601, the SIP configuration file of the SIP Servlet application is parsed.

The sip.xml file is the SIP configuration file of the SIP Servlet application, which describes Servlet class information, pattern information, and other information of the SIP Servlet application. The pattern information describes an expression in a text format and the expression is the main function of the SIP Servlet application. The SIP configuration file of the SIP Servlet application is parsed to obtain the expression in a text format (or, simply, the text expression).

In Step S602, a rule expression object is created, a rule expression is parsed and obtained from the rule expression object according to the text expression in the SIP configuration file, and the SIP Servlet application instance object is injected into the rule expression object.

A Rule object is created. The Rule object is invoked to convert the text expression into a format that can be recognized and used by the SIP container, that is, the rule expression. Then, by invoking a setter method of the rule expression object, the reference of the SIP Servlet application instance object is injected into the rule expression object.

In Step S603, the rule expression is registered to a manager of the SIP container.

The rule expression is registered to the manager of the SIP container by invoking a Rule Manager method in the SIP container.

The method of a class, which is used for the SIP container to load the SIP Servlet application in Step S512, is implemented through the process, which further includes the following steps, as shown in FIG. 6b.

In Step S611, a load object is created.

A load object OSGIAppClassLoader is created, which is invoked by the SIP container to load the resources of the SIP Servlet application.

In Step S612, a Bundle instance of the SIP Servlet application is obtained, and then transferred into constructor parameters of the load object.

The Bundle instance of the SIP Servlet application is obtained, that is, the Bundle of the previously created OSGISipApplication object is obtained. After the Bundle instance of the SIP Servlet application is obtained, the Bundle instance is transferred into constructor parameters of the OSGIAppClassLoader object. When invoking the OSGIAppClassLoader to load the SIP Servlet application, the SIP container can the obtain Bundle instance of the SIP Servlet application, so as to manage and use the resources of the Bundle of the SIP Servlet application.

Through Steps S601-S603 and Steps S611-S612, the SIP Servlet application is deployed in the SIP container. Thus, after the SIP container receives an SIP request from an external source, the SIP container queries the rule expression registered to the manager according to the message content in the SIP request, and obtains a matching rule expression object. The SIP Servlet application instance object(s) is extracted from the matching rule expression object. The load object of the SIP Servlet application is invoked, from the SIP Servlet application instance object(s), to load the resources and class of the SIP Servlet application corresponding to the rule expression object, and an instance is created for the class of the SIP Servlet application to process the SIP request.

In this embodiment, the present invention further provides an OSGI service platform. An SIP container and an SIP Servlet application are deployed on the OSGI service platform as OSGI Bundles, and the SIP Servlet application is deployed in the SIP container, such that the OSGI service platform and the SIP container jointly manage the SIP Servlet application based on the OSGI service platform.

After the SIP container and SIP Servlet application are deployed on the OSGI service platform as Bundles, the SIP Servlet application is registered to the SIP container, and the SIP container invokes the OSGIAppClassLoader to load the classes of the SIP Servlet application, such that the OSGI service platform is integrated with the SIP container to jointly manage the SIP Servlet application. The SIP Servlet application has the hot swap performance of an OSGI Bundle, and meanwhile, can be scheduled and managed by the SIP container, that is, the SIP Servlet application integrates the advantages of the two.

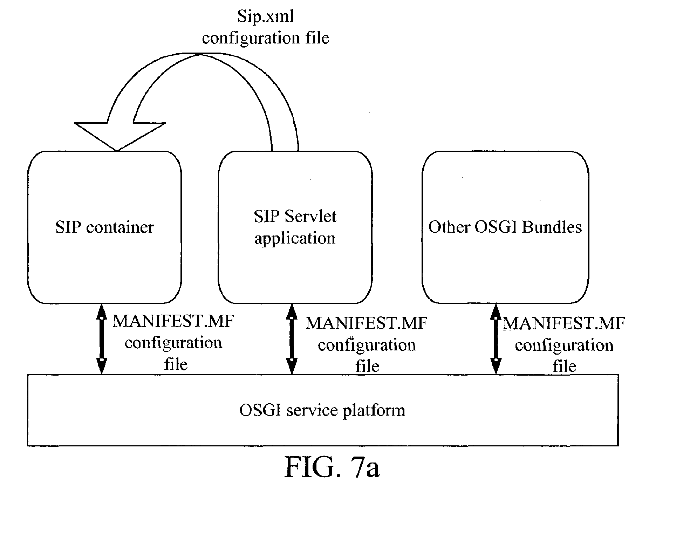

After the SIP container and the SIP Servlet application are deployed on the OSGI service platform as Bundles, the OSGI service platform is integrated with the SIP container to jointly manage the SIP Servlet application. FIG. 7a is a schematic diagram of the OSGI service platform and the SIP container integrated for jointly managing the SIP Servlet application.

Here, the SIP container is deployed on the OSGI service platform as a standard OSGI Bundle, and the SIP Servlet application is also deployed on the OSGI service platform as a standard OSGI Bundle. Therefore, as standard OSGI Bundles, the SIP Servlet application and the SIP container can communicate with other Bundles through a mechanism of the OSGI service platform.

In addition, the SIP container grants relevant management functions of each SIP Servlet application to the OSGI service platform. Specifically, when the SIP Servlet application Bundle is deployed on the OSGI service platform, the BundleActivator of the SIP Servlet application is invoked automatically by the OSGI service platform. The BundleActivator of the SIP Servlet application realizes the function of automatically deploying the SIP Servlet application in the SIP container. As such, when the SIP container loads the resources of the SIP Servlet application, it is unnecessary to load the resources from the path of the SIP Servlet application, and the resources of the SIP Servlet application are loaded through the SIP Servlet application. When the SIP Servlet application is uninstalled from the OSGI service platform, a deactivator program of the BundleActivator of the SIP Servlet application is invoked to automatically uninstall the SIP Servlet application from the SIP container.

The SIP Servlet Container needs to grant the management functions (ClassLoader and a dynamic deployment and uninstall mechanism of APP) of each SIP Servlet APP to an OSGI framework through an adaptation mechanism, so as to avoid conflicts between the Container and the OSGI framework in the same management function.

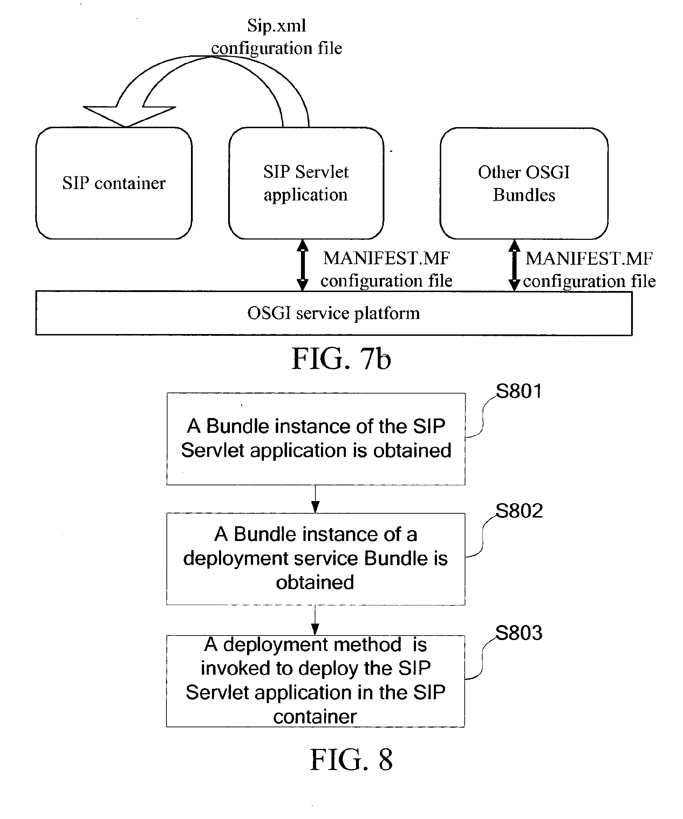

Certainly, persons skilled in the art may also enable the OSGI service platform and the SIP container to jointly manage the SIP Servlet application, without deploying the SIP container on the OSGI service platform, as shown in FIG. 7b. Specifically, when the SIP Servlet application Bundle is deployed on the OSGI service platform, the BundleActivator of the SIP Servlet application is invoked automatically. When the BundleActivator is invoked, the deployApplication method of the SIP container is invoked through a singleton pattern or a naming service and the deployApplication method is used for deploying service, thus realizing the function of automatically deploying the SIP Servlet application in the SIP container. As such, when the SIP container loads the resources of the SIP Servlet application, it is unnecessary to load the resources from the path of the SIP Servlet application, and the resources of the SIP Servlet application are loaded through the SIP Servlet application.

In this embodiment of the present invention, the SIP Servlet application is deployed on the OSGI service platform as an OSGI Bundle, such that the SIP Servlet application has better dynamic performance, is hot swappable, and can communicate with other OSGI Bundles in a standard manner.

In this embodiment of the present invention, after the SIP Servlet application is deployed on the OSGI service platform as an OSGI Bundle, the SIP Servlet application is registered to the SIP container, and a method of a class, which is used for the SIP container to load the SIP Servlet application, is invoked. Thus, the SIP container can manage the SIP Servlet application, and the OSGI service platform is integrated with the SIP container to jointly manage the SIP Servlet application.

### Second Embodiment

When this embodiment of the present invention is implemented, an OSGI Bundle which is used for deploying service, that is, a deployment service Bundle, can be deployed on the OSGI service platform. The deployment service Bundle is used to deploy the SIP Servlet application in the SIP container.

Major processes of a method for integrating an OSGI service platform and an SIP container to jointly manage an SIP Servlet application in this embodiment of the present invention are the same as those in the first embodiment, as shown in FIG. 1.

Processes for deploying the SIP Servlet application on the OSGI service platform as an OSGI Bundle and deploying the SIP Servlet application in the SIP container in this embodiment of the present invention are the same as those in the first embodiment, as shown in FIG. 2.

Processes for compiling the implementing code of the BundleActivator of the SIP Servlet application in this embodiment of the present invention are as shown in FIG. 8.

In Step S801, a Bundle instance of the SIP Servlet application is obtained.

The Bundle instance of the SIP Servlet application is obtained from the BundleContext, and then transferred to a deployment service Bundle as a constructor parameter and obtained by the deployment service Bundle.

In Step S802, a Bundle instance of the deployment service Bundle is obtained.

The Bundle instance of the deployment service Bundle is obtained from the BundleContext. The Bundle instance of the deployment service Bundle cannot be obtained unless the deployment service is deployed on the OSGI service platform as an OSGI Bundle. Persons skilled in the art are familiar with the technical measure of packaging the implementation code of the deployment service Bundle into ajar file, and deploying the jar file on the OSGI service platform. The functions of the implementation code of the deployment service Bundle will be described later.

In Step S803, a deployment method, which is used for deploying service, is invoked to deploy the SIP Servlet application in the SIP container.

After the Bundle instance of the deployment service Bundle is obtained, the deployment method of the deployment service is invoked according to the Bundle instance of the deployment service Bundle to deploy the SIP Servlet application in the SIP container.

The deployment task completed in the deployment method is the same as Step S203 in the first embodiment, as shown in FIGs. 5a and 5b.

Through the above steps, the SIP container and the SIP Servlet application are deployed on the OSGI service platform, and the SIP Servlet application is deployed in the SIP container by referring to the deployment service, such that the SIP container and the OSGI service platform jointly manage the SIP Servlet based on the OSGI service platform.

The method for deploying the SIP Servlet application in the SIP container by using the deployment service is similar to compiling a subroutine. Each time the same step is performed, it is unnecessary to re-compile a code segment for performing the step, and the subroutine can be invoked directly to perform the step. The deployment service Bundle is to provide a service of deploying the SIP Servlet application to the SIP container. Thus, each time a new SIP Servlet application is to be deployed, the deployment service Bundle can be directly referred to, so as to deploy the SIP Servlet application in the SIP container.

In this embodiment of the present invention, the SIP Servlet application is deployed on the OSGI service platform as an OSGI Bundle, such that the SIP Servlet application has better dynamic performance, is hot swappable, and can communicate with other OSGI Bundles in a standard manner.

In this embodiment of the present invention, after the SIP Servlet application is deployed on the OSGI service platform as an OSGI Bundle, the SIP Servlet application is registered to the SIP container, and a method of a class, which is used for the SIP container to load the SIP Servlet application, is invoked. Thus, the SIP container can manage the SIP Servlet application, and the OSGI service platform is integrated with the SIP container to jointly manage the SIP Servlet application.

In this embodiment of the present invention, since the method for deploying the SIP Servlet application in the SIP container by referring to the deployment service is adopted, the code efficiency is improved, thus enabling the SIP Servlet application to be deployed in the SIP container more rapidly and more conveniently.

Persons of ordinary skill in the art should understand that all or a part of the steps of the method according to the embodiments of the present invention may be implemented by a computer program instructing relevant hardware. The program may be stored in a computer readable storage medium. When the program is run, the steps of the method according to the embodiments of the present invention are performed. The storage medium may be a magnetic disk, an optical disk, a read-only memory (ROM), or a random access memory (RAM).

The above descriptions are merely preferred embodiments of the present invention. It should be noted by persons of ordinary skill in the art that modifications and improvements may be made within the scope of the appended claims.

## Claims

1. A method for deploying an SIP Servlet application, comprising:
deploying (S101), an SIP Servlet application on an Open Services Gateway Initiative, OSGI, service platform as an OSGI Bundle; and
deploying (S102), the SIP Servlet application in an SIP container;
**characterized by** that:
when the SIP Servlet application Bundle is deployed on the OSGI service platform, a BundleActivator of the SIP Servlet application is invoked automatically, and
when the BundleActivator is invoked, a deployApplication method of the SIP container is invoked through a singleton pattern or a naming service.

2. The method according to claim 1, wherein the deploying an SIP Servlet application on an OSGI service platform as an OSGI Bundle and deploying the SIP Servlet application in an SIP container further comprises:
organizing, a directory structure of the SIP Servlet application satisfying the requirements of the OSGI service platform; and adding a Bundle configuration file;
compiling the BundleActivator of the SIP Servlet application, wherein an activation method of the BundleActivator of the SIP Servlet application is invoked to invoke the deployApplication method, from the instance of the deployment service of the SIP container, through a singleton pattern or a naming service, to deploy the SIP Servlet application in the SIP container.

3. The method according to claim 2, wherein the deployApplication method is invoked to deploy the SIP Servlet application in the SIP container by the processes, comprising:
creating an instance object of the SIP Servlet application, and initialing the instance object of the SIP Servlet application; and
registering the SIP Servlet application to the SIP container and providing the method for loading the resource of the SIP Servlet application to the SIP container when the instance object of the SIP Servlet application is initialized.

4. The method according to claim 3, wherein the registering the SIP Servlet application to the SIP container comprises:
parsing (S601) and obtaining a text expression from the SIP configuration file of the SIP Servlet application;
creating (S602) a rule expression object, parsing a rule expression from the rule expression object according to the text expression, and injecting the instance object of the SIP Servlet application into the rule expression object; and
registering (S603) the rule expression into a manager of the SIP container.

5. The method according to claim 3, wherein the providing the method for loading the resource of the SIP Servlet application to the SIP container comprises:
creating (S611) a load object of the SIP Servlet application, wherein the load object is invoked by the SIP container to load the resources of the SIP Servlet application; and
obtaining (S612) a Bundle instance of the SIP Servlet application, and transferring the Bundle instance into constructor parameters of the load object.

6. The method according to claim 5, wherein the load object is invoked by the SIP container to load the resources of the SIP Servlet application through the processes, comprising:
querying, a matching rule expression object according to message content in a SIP request when the SIP container receives an SIP request; and
extracting, the instance object of the SIP Servlet application from the matching rule expression object; wherein the load object of the SIP Servlet application is invoked, from the instance object of the SIP Servlet application, to load the resources and class of the SIP Servlet application corresponding to the rule expression object, and to create an instance for the class of the SIP Servlet application to process the SIP request.

7. An Open Services Gateway Initiative, OSGI, service platform for managing an SIP Servlet application, comprising: an SIP container and an SIP Servlet application, wherein
the SIP Servlet application is deployed on the OSGI service platform as an OSGI Bundle, and is deployed in the SIP container; and
the SIP Servlet application is communicated with other OSGI Bundles on the OSGI service platform through a mechanism of the OSGI service platform;
**characterized in that** the OSGI service platform is adapted so that:
when the SIP Servlet application Bundle is deployed on the OSGI service platform, a BundleActivator of the SIP Servlet application is invoked automatically, and
when the BundleActivator is invoked, a deployApplication method of the SIP container is invoked through a singleton pattern or a naming service.

8. The OSGI service platform according to claim 7, wherein the SIP container loads the resources of the SIP Servlet application through the SIP Servlet application.

9. A computer program product, **characterized in**, comprising computer program code, which, when executed by a computer unit, will cause the computer unit to perform the method according to any one of claims 1 to 6.

## Patentansprüche

1. Verfahren zum Einsetzen einer SIP-Servlet-Anwendung, das Folgendes aufweist:
Einsetzen (S101) einer SIP-Servlet-Anwendung auf einer "Open Services Gateway Initiative"-OSGI-Dienstplattform als ein "OSGI-Bundle"; und
Einsetzen (S 102) der SIP-Servlet-Anwendung in einem SIP-Container;
**dadurch gekennzeichnet, dass**:
wenn das "SIP-Servlet-Anwendungs-Bundle" auf der OSGI-Dienstplattform eingesetzt wird, automatisch ein "BundleActivator" der SIP-Servlet-Anwendung aufgerufen wird, und
wenn der "BundleActivator" aufgerufen ist, ein "deployApplication"-Verfahren des SIP-Containers durch ein Singleton-Muster oder einen Benennungsdienst aufgerufen wird.

2. Verfahren nach Anspruch 1, wobei das Einsetzen einer SIP-Servlet-Anwendung auf einer OSGI-Dienstplattform als ein "OSGI-Bundle" und das Einsetzen der SIP-Servlet-Anwendung in einem SIP-Container ferner Folgendes aufweist:
Organisieren einer Verzeichnisstruktur der SIP-Servlet-Anwendung, die die Anforderungen der OSGI-Dienstplattform erfüllt; und Hinzufügen einer "Bundle"-Konfigurationsdatei;
Kompilieren des "BundleActivator" der SIP-Servlet-Anwendung, wobei ein Aktivierungsverfahren des "BundleActivator" der SIP-Servlet-Anwendung aufgerufen wird, um das "deployApplication"-Verfahren von der Instanz des Einsatzdienst des SIP-Containers durch ein Singleton-Muster oder einen Benennungsdienst aufzurufen, um die SIP-Servlet-Anwendung im SIP-Container einzusetzen.

3. Verfahren nach Anspruch 2, wobei das "deployApplication"-Verfahren aufgerufen wird, um die SIP-Servlet-Anwendung im SIP-Container durch die Prozesse einzusetzen, die Folgendes aufweisen:
Erzeugen eines Instanzobjekts der SIP-Servlet-Anwendung, und Initialisieren des Instanzobjekts der SIP-Servlet-Anwendung; und
Registrieren der SIP-Servlet-Anwendung am SIP-Container und Bereitstellen des Verfahrens zum Laden der Ressource der SIP-Servlet-Anwendung in den SIP-Container, wenn das Instanzobjekt der SIP-Servlet-Anwendung initialisiert ist.

4. Verfahren nach Anspruch 3, wobei das Registrieren der SIP-Servlet-Anwendung am SIP-Container Folgendes aufweist:
Parsen (S601) und Erhalten eines Textausdrucks aus der SIP-Konfigurationsdatei der SIP-Servlet-Anwendung;
Erzeugen (S602) eines Regelausdruckobjekts, Parsen eines Regelausdrucks aus dem Regelausdruckobjekt gemäß dem Textausdruck und Injizieren des Instanzobjekts der SIP-Servlet-Anwendung in das Regelausdruckobjekt; und
Registrieren (S603) des Regelausdrucks in einem Manager des SIP-Containers.

5. Verfahren nach Anspruch 3, wobei das Bereitstellen des Verfahrens zum Laden der Ressource der SIP-Servlet-Anwendung in den SIP-Container Folgendes aufweist:
Erzeugen (S611) eines Ladeobjekts der SIP-Servlet-Anwendung, wobei das Ladeobjekt durch den SIP-Container aufgerufen wird, um die Ressourcen der SIP-Servlet-Anwendung zu laden; und
Erhalten (S612) einer "Bundle"-Instanz der SIP-Servlet-Anwendung, und Transferieren der "Bundle"-Instanz in Konstruktorparameter des Ladeobjekts.

6. Verfahren nach Anspruch 5, wobei das Ladeobjekt durch den SIP-Container aufgerufen wird, um die Ressourcen der SIP-Servlet-Anwendung durch die Prozesse zu laden, die Folgendes aufweisen:
Abfragen eines passenden Regelausdruckobjekts gemäß einem Nachrichteninhalt in einer SIP-Anforderung, wenn der SIP-Container eine SIP-Anforderung empfängt; und
Extrahieren des Instanzobjekts der SIP-Servlet-Anwendung aus dem passenden Regelausdruckobjekt; wobei das Ladeobjekt der SIP-Servlet-Anwendung vom Instanzobjekt der SIP-Servlet-Anwendung aufgerufen wird, um die Ressourcen und die Klasse der SIP-Servlet-Anwendung zu laden, die dem Regelausdruckobjekt entspricht, und um eine Instanz für die Klasse der SIP-Servlet-Anwendung zu erzeugen, um die SIP-Anforderung zu verarbeiten.

7. "Open Services Gateway Initiative"-OSGI-Dienstplattform zur Verwaltung einer SIP-Servlet-Anwendung, die Folgendes aufweist: einen SIP-Container und eine SIP-Servlet-Anwendung, wobei die SIP-Servlet-Anwendung auf der OSGI-Dienstplattform als ein "OSGI-Bundle" eingesetzt wird und im SIP-Container eingesetzt wird; und
die SIP-Servlet-Anwendung mit anderen "OSGI-Bundles" auf der OSGI-Dienstplattform durch einen Mechanismus der OSGI-Dienstplattform übertragen wird; **dadurch gekennzeichnet, dass** die OSGI-Dienstplattform eingerichtet ist, so dass wenn das "SIP-Servlet-Anwendungs-Bundle" auf der OSGI-Dienstplattform eingesetzt wird, automatisch ein "BundleActivator" der SIP-Servlet-Anwendung aufgerufen wird, und
wenn der "BundleActivator" aufgerufen wird, ein "deployApplication"-Verfahren des SIP-Containers durch ein Singleton-Muster oder einen Benennungsdienst aufgerufen wird.

8. OSGI-Dienstplattform nach Anspruch 7, wobei der SIP-Container die Ressourcen der SIP-Servlet-Anwendung durch die SIP-Servlet-Anwendung lädt.

9. Computerprogrammprodukt, das **dadurch gekennzeichnet ist, dass** es einen Computerprogrammcode aufweist, der, wenn er durch eine Computereinheit ausgeführt wird, die Computereinheit veranlassen wird, das Verfahren nach einem der Ansprüche 1 bis 6 auszuführen.

## Revendications

1. Procédé de déploiement d'une application SIP Servlet, comprenant :
le déploiement (S101) d'une application SIP Servlet sur une plate-forme de service OSGI (Open Services Gateway Initiative) en tant que Bundle OSGI ; et
le déploiement (S 102) de l'application SIP Servlet dans un conteneur SIP ;
**caractérisé en ce que** :
quand le Bundle de l'application SIP Servlet est déployé sur la plate-forme de service OSGI, un Activateur de Bundle de l'application SIP Servlet est appelé automatiquement, et
quand l'Activateur de Bundle est appelé, un procédé de déploiement d'application du conteneur SIP est appelé par le biais d'un modèle de singleton ou d'un service d'appellation.

2. Procédé selon la revendication 1, dans lequel le déploiement d'une application SIP Servlet sur une plate-forme de service OSGI en tant que Bundle OSGI et le déploiement de l'application SIP Servlet dans un conteneur SIP comprend en outre :
l'organisation d'une structure de répertoire de l'application SIP Servlet satisfaisant les exigences de la plate-forme de service OSGI ; et l'ajout d'un fichier de configuration de Bundle ;
la compilation de l'Activateur de Bundle de l'application SIP Servlet, dans laquelle un procédé d'activation de l'Activateur de Bundle de l'application SIP Servlet est appelé pour appeler le procédé de déploiement d'application, à partir de l'instance du service de déploiement du conteneur SIP, par le biais d'un modèle de singleton ou d'un service d'appellation, afin de déployer l'application SIP Servlet dans le conteneur SIP.

3. Procédé selon la revendication 2, dans lequel le procédé de déploiement d'application est appelé pour déployer l'application SIP Servlet dans le conteneur SIP par les processus comprenant :
la création d'un objet d'instance de l'application SIP Servlet, et l'initialisation de l'objet d'instance de l'application SIP Servlet ; et
l'enregistrement de l'application SIP Servlet auprès du conteneur SIP et la fourniture du procédé pour charger la ressource de l'application SIP Servlet dans le conteneur SIP quand l'objet d'instance de l'application SIP Servlet est initialisé.

4. Procédé selon la revendication 3, dans lequel l'enregistrement de l'application SIP Servlet auprès du conteneur SIP comprend :
l'analyse syntaxique (S601) et l'obtention d'une expression de texte à partir du fichier de configuration SIP de l'application SIP Servlet ;
la création (S602) d'un objet d'expression de règle, l'analyse syntaxique d'une expression de règle de l'objet d'expression de règle en fonction de l'expression de règle, et l'injection de l'objet d'instance de l'application SIP Servlet dans l'objet d'expression de règle ; et
l'enregistrement (S603) de l'expression de règle dans un gestionnaire du conteneur SIP.

5. Procédé selon la revendication 3, dans lequel la fourniture du procédé pour charger la ressource de l'application SIP Servlet dans le conteneur SIP comprend :
la création (S611) d'un objet de charge de l'application SIP Servlet, l'objet de charge étant appelé par le conteneur SIP pour charger les ressources de l'application SIP Servlet ; et
l'obtention (S612) d'une instance de Bundle de l'application SIP Servlet, et le transfert de l'instance de Bundle dans des paramètres constructeurs de l'objet de charge.

6. Procédé selon la revendication 5, dans lequel l'objet de charge est appelé par le conteneur SIP pour charger les ressources de l'application SIP Servlet par le biais des processus, comprenant :
l'interrogation d'un objet d'expression de règle correspondant en fonction du contenu de message dans une requête SIP quand le conteneur SIP reçoit une requête SIP ; et
l'extraction de l'objet d'instance de l'application SIP Servlet de l'objet d'expression de règle correspondant ; dans lequel l'objet de charge de l'application SIP Servlet est appelé, à partir de l'objet d'instance de l'application SIP Servlet, pour charger les ressources et la classe de l'application SIP Servlet correspondant à l'objet d'expression de règle, et créer une instance pour la classe de l'application SIP Servlet afin de traiter la requête SIP.

7. Plate-forme de service OSGI (Open Services Gateway Initiative) pour gérer une application SIP Servlet, comprenant : un conteneur SIP et une application SIP Servlet, dans laquelle
l'application SIP Servlet est déployée sur la plate-forme de service OSGI en tant que Bundle OSGI, et est déployée dans le conteneur SIP ; et
l'application SIP Servlet est communiquée avec d'autres Bundles OSGI sur la plate-forme de service OSGI par le biais d'un mécanisme de la plate-forme de service OSGI ;
**caractérisée en ce que** la plate-forme de service OSGI est adaptée de telle sorte que :
lorsque le Bundle de l'application SIP Servlet est déployé sur la plate-forme de service OSGI, un Activateur de Bundle de l'application SIP Servlet soit appelé automatiquement ; et
lorsque l'Activateur de Bundle est appelé, un procédé de déploiement d'application du conteneur SIP soit appelé par le biais d'un modèle de singleton ou d'un service d'appellation.

8. Plate-forme de service OSGI selon la revendication 7, dans laquelle le conteneur SIP charge les ressources de l'application SIP Servlet par le biais de l'application SIP Servlet.

9. Produit de programme informatique, **caractérisé en ce qu'**il comprend un code de programme informatique qui, lorsqu'il est exécuté par une unité d'ordinateur, amène l'unité d'ordinateur a exécuter le procédé selon l'une quelconque des revendications 1 à 6.
